# EUROPEAN PATENT SPECIFICATION

(11) **EP 0 706 426 B1**
(45) Date of publication and mention of the grant of the patent: **02.12.1998**
(21) Application number: 94919540.8
(22) Date of filing: 29.06.1994
(51) Int. Cl.: B08B 5/02, G02C 13/00, B08B 5/04

(54) **METHOD AND APPARATUS FOR CLEANING OPTICAL SURFACES**
VERFAHREN UND VORRICHTUNG ZUR REINIGUNG OPTISCHER FLÄCHEN
PROCEDE ET APPAREIL DE NETTOYAGE DE SURFACES OPTIQUES

(30) Priority: 29.06.1993 CA 2099711
(43) Date of publication of application: 17.04.1996
(73) Proprietor: IMAX CORPORATION, Toronto Ontario M4Y 1N1 (CA)
(72) Inventor: KOWALCHUK, Kevin, Peter, Oakville, Ontario L6K 1N2 (CA)
(74) Representative: Bibby, William Mark
(86) International application number: CA9400351
(87) International publication number: WO9501229

(56) References cited:
- EP-A- 0 223 084
- WO-A-91/11694
- DE-A- 4 132 138
- US-A- 4 740 248
- US-A- 5 143 101
- PATENT ABSTRACTS OF JAPAN vol. 16, no. 163 (P-1341) 21 April 1992 & JP,A,04 012 381 (RICOH CO LTD) 16 January 1992
- PATENT ABSTRACTS OF JAPAN vol. 13, no. 17 (P-813) 17 January 1989 & JP,A,63 221 318 (AISIN SEIKI CO LTD) 14 September 1988
- PATENT ABSTRACTS OF JAPAN vol. 15, no. 388 (C-872) 2 October 1991 & JP,A,03 157 174 (MITA IND CO LTD) 5 July 1991
- RESEARCH DISCLOSURE, no.335, March 1992, EMSWORTH GB page 202, XP000301104 'non-contact/Non-destructive material remover'
- PATENT ABSTRACTS OF JAPAN vol. 11, no. 38 (C-401) (2485) 4 February 1987 & JP,A,61 204 386 (NANIWA SEITEI KK) 10 September 1986

## Description

### FIELD OF THE INVENTION

This invention relates generally to a method and apparatus for cleaning soiled optical surfaces using vacuum means. More specifically (but not exclusively), the invention deals with a method and apparatus for cleaning soiled optical lens surfaces of 3-D liquid crystal eyeglasses used in the presentation of high quality stereoscopic motion pictures.

### BACKGROUND OF THE INVENTION

There are several commonly known methods of displaying 3-D motion pictures all of them are stereoscopic; that is they involve coding and display of separate left and right eye images in such a manner that only the proper eye can see the corresponding images. In the anaglyph method, different colour filters are used. Typically, the left eye and right eye images are projected simultaneously but in different colours, say red and blue respectively, and the viewer wears a pair of glasses fitted with red and blue filters arranged to appropriately separate the images.

Another method of image separation involves the use of mutually extinguishing polarizing filters. The filters are placed in front of left and right eye projectors with their polarizing axes at 90 degrees to each other. Viewers wear eyeglasses with polarizing filters arranged in the same orientation as the filters on the projectors. The left and right eye images appear on the screen at the same time, but only the left eye polarized light is transmitted through the left eye lens of the eyeglasses and only the right eye polarized light is transmitted through the right eye lens.

A third known method involves time multiplexing of left and right eye images. Left and right eye images are presented alternately so that there is only one eye image on the screen at any one moment in time. Viewers wear glasses which alternately block the view of one eye so that only the correct image will be seen by each eye. The glasses typically have electro-optic liquid crystal shutters and are powered by batteries. Alternate-eye 3-D glasses are superior in overall performance to anaglyph or polarizer glasses and they allow spectacular full colour 3-D motion pictures to be projected onto a dome shaped screen. Some of the details of such a 3-D motion picture system are described in U.S. Patents Nos. 4,424,529 (Roese et al.), 4,957,361 (Shaw), 4,966,454 (Toporkiewicz), and 5,002,387 (Baljet et al.).

One major disadvantage of using liquid crystal eyeglasses in a motion picture theatre is that they are expensive to manufacture. It is imperative that each pair be reused many times to offset this expense. This is not the case for anaglyph or polarizer type glasses which are inexpensive and can be discarded after a few uses. Typically, a pair of liquid crystal eyeglasses must last several thousand uses. After each use, it is desirable to have the glasses cleaned to remove fingerprints from the lenses and makeup and hair from other parts that come into contact with the skin of a user. The process of cleaning the glasses can be hazardous to the glasses because of the potential for cleaning fluid to penetrate into the glasses and damage the driving electronics and/or the power source.

One known method for cleaning large numbers of liquid crystal glasses in a systematic manner involves teams of people to wash the lenses by hand. To ensure a smooth and efficient process the glasses are placed on a conveyor belt which brings them to cleaning staff on either side of the belt at a preset frequency. Although cleaning by this method is effective and safe for the inner electronics it is very labour and material intensive and hence expensive. A further disadvantage is that substantial floor space is required to house the conveyor belt and cleaning staff, and this is usually scarce in specialty motion picture theatres.

Another known method for washing large numbers of glasses is to wash them in a batch washing machine similar to a bar-glass dishwasher. For this method to be successful it is essential that the glasses be completely sealed and waterproof. The sealed glasses are placed in racks which are carried by a conveyor belt through several washing stations, including wash, rinse and dry stations, of an aqueous washing machine. This method is not suitable because it is difficult (and expensive) to seal the glasses to such a degree that they could survive thousands of washings.

### DESCRIPTION OF RELATED ART

U.S. Patent No. 4,026,701 to Till et al. discloses an apparatus and process for cleaning the surface of an electrostatic imaging member. A device provides for a gas flow to impinge on a soiled surface and for a suction flow to remove the gas and the residue removed by the gas. A cleaning shoe is positioned as close as possible to the soiled surface in order to increase the velocity of the gas flow. At the same time, the gas flow and suction are carefully balanced so that the cleaning head floats above the soiled surface on a gas bearing. The gap between the soiled surface and at the cleaning head surface is maintained at about 0.076 to 0.381 mm (0.003 to 0.015 inches) which allows the effective removal of particles of about 0.076 to 0.254 mm (.003 to .010 inch) size. Excellent cleaning is reported with a 0.127 mm (.005 inch) gap and a total air flow of 0.196 m³ (7 cubic feet) per minute.

U.S. Patent No. 4,956,025 to Dean et al. discloses a device and method for non-contact cleaning of very small particles (of the order of 1-2 microns) from semiconductor surfaces. The device uses a combination of gas pressure and vacuum to create and maintain high velocity flow to dislodge and remove contaminating particles. In addition, the pressure and vacuum combination creates a planar gas bearing which forms a self-regulating gap of the order of 20-50 microns between a cleaning head and a soiled surface. The device includes a circular relief groove and shallow counter bores to create eddy and turbulence effects in the gas flow to aid in the removal of particles.

U.S. Patent No. 5,063,413 to Domoto et al. discloses a method and apparatus for removing excess liquid from an image receptor. Excess liquid is removed by a shearing action resulting from a high velocity air parallel to the surface of the image receptor. The air flow can be driven by pulling a vacuum which collects the excess liquid to prevent its release into the environment and allow its reuse.

U.S. Patent No. 4,740,248 to Thro et al. discloses a method and apparatus for cleaning a lens system in which an air flow is provided across the lens surface and a flow of ionized air is added into the air flow.

It is an object of this invention then to describe a cleaning method and apparatus suitable for washing large numbers of liquid crystal 3-D eyeglasses in a timely and safe manner, with a high probability that the eyeglasses will survive thousands of washings. It is a further object of this invention to describe a method and apparatus for cleaning the lenses of liquid crystal 3-D eyeglasses without exposing the electronics and power supply of the glasses to moisture.

### SUMMARY OF THE INVENTION

According to the invention there is provided a method and apparatus for cleaning an optical surface as defined in independent claims 1 and 8 respectively.

The apparatus provided by the invention includes a cleaning head having a front face defined by a seal for sealing contact with a surface to be cleaned, the head being adapted to define with said surface a shallow cleaning cavity. Means is provided for generating in the cavity a high velocity air flow across the surface. The apparatus also includes means for introducing a cleaning fluid into the high velocity air flow upstream of the surface.

While the related prior art recognizes that effective cleaning can result from a high velocity air flow over surface produced by a combination of pressure and vacuum the art does not recognize the advantages of adding a flow of cleaning fluid to a high velocity gas flow for rapid cleaning and for then abruptly stopping the flow of said cleaning fluid to allow the continuing gas flow to remove residual cleaning fluid and thus dry the surface. The prior art also does not recognize the advantage of providing a circumferential seal which contains both the gas and cleaning fluid and prevents fluid from penetrating and damaging electronics associated with the surface to be cleaned.

### BRIEF DESCRIPTION OF THE DRAWINGS

Fig. 1 is the front view of a pair of 3-D liquid crystal glasses suitable for cleaning by the method and apparatus of the invention;
Fig. 2 is a schematic illustration of the method of the invention;
Fig. 3 is a diagrammatic elevational view of the front face of a cleaning head suitable for use in the apparatus;
Fig. 4 is a schematic illustration of the cleaning method performed using the cleaning head depicted in Fig. 3; and,
Fig. 5a, 5b and 5c are schematic plan views illustrating the sequence of operation of an apparatus according to a preferred embodiment of the invention, in which front and rear cleaning head assemblies are used to simultaneously clean front and rear surfaces of both lenses of a pair of 3-D glasses.

### DETAILED DESCRIPTION OF PREFERRED EMBODIMENTS

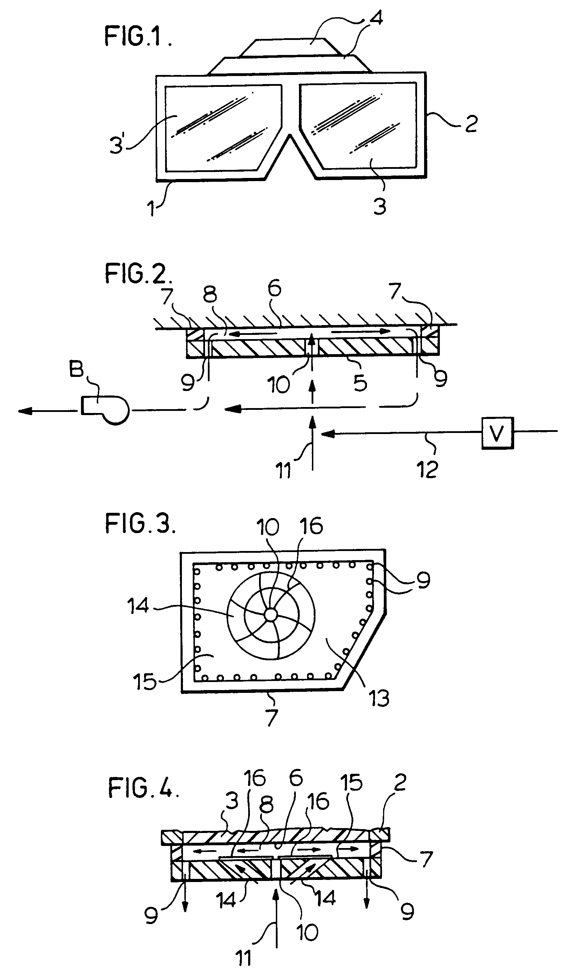

Fig. 1 is a simplified front view of a pair of 3-D liquid crystal eyeglasses 1 to be cleaned by the method and apparatus of the invention. The eyeglasses include a frame 2 which houses two liquid crystal shutter lenses 3 and 3'. Attached to frame 2 are secondary assemblies 4 which house driving circuitry and a power supply for the shutters.

Referring now to Fig. 2, a method which allows rapid and splash-free cleaning of an optical surface is schematically depicted. A cleaning head 5 is urged into position against a soiled optical surface 6 in such a manner that a liquid-tight seal is formed between a circumferential edge seal 7 of the cleaning head and surface 6. A shallow cavity 8 is thus defined by the surface 6, the inner face of cleaning head 5 and the inner edges of circumferential seal 7. The thickness (depth) of cavity 8 is defined in part by the deformation characteristics of the circumferential seal and by the amount of force applied in urging the cleaning head against the soiled surface. This thickness is maintained at an optimal amount which ensures that when an air flow is introduced into cavity 8 a high velocity is achieved over the soiled surface. Contaminants on soiled surface 6 are removed by a shearing force resulting from the rapidly moving air.

In practice, it has been found that effective cleaning is achieved when a thickness in the range of 0.51 to 0.76 mm (0.020 to 0.030 inches) is used with an air flow of about 0.084 m³ (3 cubic feat) per minute. In the illustrated embodiment, the air flow is generated by vacuum means pulling air out of cavity 8 through a plurality of exit ports 9 around the outer edges of the surface to be cleaned. In Fig. 2, the vacuum means is denoted B and is represented by a conventional air blower.

In use, air is drawn into cavity 8 through a central entry port 10. Cleaning fluid is introduced into the air flow 11 upstream of cavity 8 to assist in the removal of contaminants by chemical as well as mechanical (shear) means. As the high velocity air/fluid mixture travels over surface 6, contaminants are removed and carried away through exit ports 9. After a brief period of time, injection of cleaning fluid into the entry air flow is stopped and any residual cleaning fluid in cavity 8 is removed by continuing the air flow for a brief "drying" period. The air flow is then terminated and cleaning head 5 is removed from surface 6, completing the cleaning cycle.

In Fig. 2, means for introducing cleaning fluid into the air flow is diagrammatically indicated by reference numeral 12. In practice, these means may comprise a simple pipe for supplying the fluid and a valve V (e.g. a solenoid valve) for controlling fluid flow in the pipe. When the valve is open, cleaning fluid is drawn from the pipe by the air flow 11. Introduction of the cleaning fluid could alternatively be performed by positively pumping the fluid into the air, although it is not believed necessary to do this.

There are many possible cleaning fluid formulations which could be used to clean the lenses of the glasses. One formulation that has been found to be particularly effective is a mixture of water and Kodak Photoflo in a 600:1 ratio.

Fig. 3 depicts a preferred embodiment of a cleaning head 13 as seen "face on" (i.e. in front elevation). The shape of the cleaning head is designed to couple precisely with a particular lens face of a pair of liquid crystal glasses of the type depicted in Fig. 1, by making sealing contact against the portion of the frame 2 that surrounds the lens face. Edge seal 7 extends continuously around the periphery of the cleaning head and the cleaning head has an inner surface 15 within seal 7. Air and fluid are introduced into the shallow cleaning cavity defined by seal 7, surface 15 and a parallel soiled optical surface 6 through a central entry port 10 and a surrounding annular entry channel or ring 14. Curved vanes 16 within the entry ring deflect and direct a portion of the air and fluid entering through entry ring 14 in such a manner to induce a slight swirl in the air/fluid flow within cavity 8, thereby ensuring that the cleaning flow of air and fluid completely covers the soiled surface. The air/fluid flow and removed contaminants exit through a plurality of exit ports 9 located around the periphery of the cleaning face.

Fig. 4 is an edge view of the cleaning face illustrated in Fig. 2 showing how air and fluid is introduced into cavity 8. Approximately 50% of the flow is introduced through central entry port 10 and travels over surface 15. The remainder of the air/fluid flow travels through a plurality of channels defined by ring 14 and the vanes 16 and travels over surface 15. As in the embodiment of Fig. 2, the air/fluid flow is drawn by vacuum towards exit ports 9.

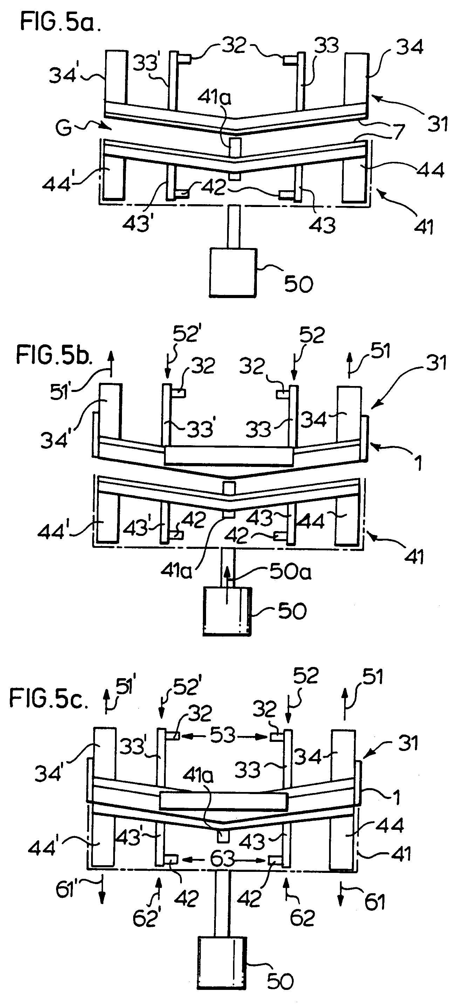

Figs. 5a, b and c are plan views which schematically illustrate a series of sequential steps in the cleaning method of the invention as used in a preferred embodiment to simultaneously clean all four lens faces of a pair of liquid crystal glasses.

As shown, two cleaning or washing assemblies 31 and 41 each include two of the cleaning (washing) heads illustrated in Figs. 3 and 4. The assemblies 31 and 41 are supported on a base which is provided with the necessary pneumatic, electrical and cleaning fluid connections (not shown) to supply the cleaning heads.

A gap G (Fig. 5a) between the two assemblies 31 and 41 allows a pair of glasses 1 to be inserted vertically downwardly between the two assemblies and located on assembly 31 as shown in Fig. 5b. Assembly 31 is immovably supported on the base, but assembly 41 is slidably mounted in a channel 41a which allows it to be driven by an air cylinder 50 towards assembly 31 with the goal of sandwiching the glasses between the two cleaning head assemblies. An infrared sensor (not shown) detects the presence of a pair of glasses when they are dropped into position and a signal is sent to a microprocessor which controls the cleaning process by sending signals at preset times to a number of actuators (not shown), including air cylinder 50.

A first signal is sent from the microprocessor to an actuator to initially apply vacuum to cleaning assembly 31 only, to ensure that the glasses are firmly seated on assembly 31. As seen in Fig. 5b, air (represented by arrows 51, 51') is drawn out of manifolds 34, 34' associated with the exit ports 9 (Figs. 2 to 4) of each cleaning head of assembly 31, causing air to be drawn into entry tubes 33, 33' associated with the entry ports 10 of the cleaning heads. Corresponding manifolds and entry tubes for assembly 41 are indicated at 44, 44' and 43, 43' respectively. Cleaning fluid inlets on the entry tubes are indicated at 32 and 42.

Next, a signal is sent from the microprocessor to air cylinder 50, which moves assembly 41 towards assembly 31 as indicated by arrow 50a in Fig. 5b, to the position shown in Fig. 5c. Shortly thereafter, a signal from the microprocessor to a further actuator applies vacuum to the manifolds 44, 44' of cleaning assembly 41, causing air to be drawn into entry tubes 43, 43'. In Fig. 5c, the respective air flows are indicated at 61, 61' and 62, 62'.

In each cleaning assembly, air is initially drawn from the vicinity of the inner surfaces 15 (Fig. 4) of the respective heads and from entry tubes 33, 33', 43, 43'. After a preset time, when the glasses are firmly sandwiched between assemblies 31 and 41 and an airtight seal around each lens face has been created, air is drawn completely from entry tubes 33, 33', 43, 43' resulting in a flow of air in the cleaning cavity 8 defined by each lens face, the associated cleaning head surface 15 and the compressible seal 7 surrounding the lens face.

A signal is then sent from the microprocessor to open four fluid control solenoids (not shown) causing cleaning fluid to be drawn into the air flow, as indicated by the arrows 53 and 63 in Fig. 5c. The solenoids are controlled to remain open for a brief amount of time, typically for 1-3 seconds, after which they are closed. Air continues to flow over the faces of the glasses for an additional period of time, in the range of 10-20 seconds during which any remaining cleaning fluid is removed. The overall cleaning cycle time for a pair of glasses is then in the range of 11-23 seconds and is determined by considering both cleaning effectiveness and throughput capacity.

A further signal is then sent from the microprocessor to shut off the vacuum to both cleaning assemblies. Finally a signal is sent by the microprocessor to air cylinder 50 which causes assembly 41 to retract to its original position allowing the glasses to be removed.

It will of course be understood that the preceding description relates to particular preferred embodiments of the invention and that many modifications are possible within the broad scope of the claims. Some of those modifications have been indicated and others will be apparent to a person skilled in the art.

It should also be noted that references in the present application to applications in the invention in cleaning soiled "optical surfaces" are not intended to restrict the invention to the cleaning of eyeglass lenses. For example, the invention could be applied to the cleaning of hollow lenses, e.g. projection lenses, to mirrors or even to plain glass surfaces used, for example, in optical systems such as photocopying machines.

## Claims

1. A method of cleaning an optical surface (6) comprising the steps of:
(a) providing a cleaning head (5) having a front face which includes a seal (7) shaped to circumscribe the optical surface to be cleaned;
(b) bringing said head and surface together so that the optical surface and the cleaning head combine to form a sealed cleaning cavity (8);
(c) generating in said cavity, a high velocity air flow (11) across said optical surface;
(d) introducing a cleaning fluid into the high velocity air flow upstream of said surface (6); and, (e) terminating the introduction of
cleaning fluid while maintaining said air flow to remove any residual cleaning fluid.

2. A method as claimed in claim 1, wherein said step of generating a high velocity air flow comprises introducing air into said cavity (8) generally in a centre region of said surface, and removing air from said cavity (8) from a plurality of locations distributed around a perimeter region of said surface.

3. A method as claimed in claim 2, wherein said step of introducing air into said cavity is performed by introducing a portion of the air flow into said cavity through a central port (10), and introducing the remainder of the air flow into said cavity through an annular channel (14) extending around said port.

4. A method as claimed in claim 3, wherein said annular channel includes a plurality of vanes (16) that are curved in the same direction with respect to said central port (10) so as to deflect air entering said cavity through said channel (14) to flow in a pattern in which the air generally swirls about said central port within said cavity.

5. A method as claimed in claim 1, wherein said step of generating a high velocity air flow in said cavity (8) is performed by drawing air from said cavity by vacuum means (B).

6. A method as claimed in claim 1, wherein said optical surface is a lone of a pair of eyeglasses (1) having a frame (2) housing a pair of said lenses (3, 3'), the frame extending around the perimeter of each said lens, and wherein said cleaning head seal (7) is shaped to seal against said frame (2) around the perimeter of the lens to be cleaned.

7. A method an claimed in claim 6 for simultaneously cleaning both lenses of a said pair of eyeglasses, the method comprising the further steps of:
providing a pair of cleaning assemblies (31, 41) for cleaning respective front and rear surfaces of the eyeglass lenses, each assembly including two said cleaning heads (5) for simultaneously cleaning the surfaces of both lenses;
arranging said assemblies at a spacing sufficient to permit introduction of a pair of eyeglasses (1) therebetween,
positioning a said pair of eyeglasses between said assemblies;
bringing the respective assemblies (31, 41) into contact with the eyeglasses (1) so that each cleaning head (5) seals around the frame portion (2) of the respective lens surface to be cleaned and defines a said cleaning cavity (8) including said surface; and,
simultaneously cleaning all of said surfaces by said steps (b), (c) and (d);
separating the cleaning assemblies (31, 41) to permit removal of the eyeglasses (1).

8. An apparatus for cleaning an optical surface comprising a cleaning head (5) having a front face defined by a seal (7) for sealing contact with a said optical surface (6) to he cleaned, said seal (7) being shaped to circumscribe said surface, and the cleaning head being adapted to define with said surface a shallow sealed cleaning cavity (8) including said surface, means for generating in said cavity a high velocity air flow (11) across said surface, and means (12) for introducing a cleaning fluid into the high velocity air flow upstream of said surface and for terminating the introduction of cleaning fluid while maintaining said air flow.

9. An apparatus as claimed in claim 8, wherein said cleaning head (5) is provided with air inlet means (10) in a centre region of said head, and with a plurality of air outlets (9) distributed around a perimeter region of the head adjacent said seal (7).

10. An apparatus as claimed in claim 9, wherein said air inlet means includes a central port (10) through which a portion of the air flow into the cavity can be introduced, and an annular channel (14) extending around said port through which the remainder of the air flow can be introduced.

11. An apparatus as claimed in claim 10, wherein said annular channel includes a plurality of vanes (16) that are curved in the same direction with respect to said central port (10) so as to deflect air entering the cavity through said channel (14) to flow in a pattern in which the air generally swirls about the central port within the cavity (8).

12. An apparatus as claimed in claim 8, wherein said means for generating in said cavity a high velocity air flow across said surface comprises vacuum means (B) for drawing air through the cavity.

13. An apparatus as claimed in claim 8 for cleaning a lens of a pair of eyeglasses (1) having a frame (2) housing a pair or said lenses (3, 3'), the frame (2) extending around the perimeter of each said lens, wherein the cleaning head seal (7) is shaped to seal against said frame around the perimeter of the lens to be cleaned.

14. An apparatus as claimed in claim 13 for simultaneously cleaning both lenses of a said pair of eyeglasses (1), the apparatus comprising:
a pair of cleaning assemblies (31, 41) for cleaning respective front and rear surfaces of the eyeglass lenses (3, 3'), each assembly including two such cleaning heads (5) for simultaneously cleaning the surfaces of both lenses;
means (50) for bringing the respective assemblies (31, 41) into contact with said eyeglasses (1) so that each cleaning head (5) seals around the frame portion (2) of the respective lens surface to be cleaned and defines a cleaning cavity (8) including said surface;
wherein said means for generating a high velocity air flow (11) is adapted to generate a said flow in each said cavity (8) across the surface of the lens within that cavity, and wherein said moans (12) for introducing a cleaning fluid into the high velocity air flow is arranged to introduce the fluid into the air flow through each said cavity, and,
means (50) for separating the cleaning assemblies and the eyeglasses to permit removal of the eyeglasses from the apparatus.

## Patentansprüche

1. Verfahren zum Reinigen einer optischen Oberfläche (6), umfassend die Schritte:
(a) Bereitstellen eines Reinigungskopfes (5) mit einer vorderseitigen Fläche, die eine Dichtung (7) aufweist, die geformt ist, um die zu reinigende optische Oberfläche zu umschreiben;
(b) Zusammenbringen des Kopfes und der Oberfläche, so daß die optische Oberfläche und der Reinigungskopf einander kombinieren, um einen abgedichteten Reinigungshohlraum (8) zu formen;
(c) Erzeugen eines Luftstromes (11) mit hoher Geschwindigkeit über die optische Oberfläche in dem Hohlraum;
(d) Einführen eines Reinigungsfluids in den Luftstrom mit hoher Geschwindigkeit stromaufwärts von der Oberfläche (6); und
(e) Beenden des Einführens des Reinigungsfluids, während der Luftstrom beibehalten wird, um jegliches Verbleiben des Reinigungsfluids zu entfernen.

2. Verfahren gemäß Anspruch 1, wobei der Schritt des Erzeugens eines Luftstroms mit hoher Geschwindigkeit das Einführen von Luft in den Hohlraum (8) im allgemeinen in einem Mittelbereich der Oberfläche und das Entfernen von Luft von dem Hohlraum an einer Mehrzahl von Orten, die um einen Umfangsbereich der Oberfläche angeordnet sind, umfaßt.

3. Verfahren gemäß Anspruch 2, wobei der Schritt des Einführens von Luft in den Hohlraum ausgeführt wird, indem ein Teil des Luftstroms in den Hohlraum durch eine mittige Öffnung (10) eingeführt wird, und der Rest des Luftstroms in den Hohlraum durch einen ringförmigen Kanal (14), der sich um die Öffnung erstreckt, eingeführt wird.

4. Verfahren gemäß Anspruch 3, wobei die ringförmige Rinne eine Mehrzahl von Schaufeln (16) aufweist, die in derselben Richtung in bezug auf die mittige Öffnung (10) gekrümmt sind, um die in den Hohlraum durch den Kanal (14) eintretende Luft umzuleiten, damit sie in einem Strömungsmuster strömt, in dem die Luft im allgemeinen um die mittige Öffnung innerhalb des Hohlraumes herumwirbelt.

5. Verfahren gemäß Anspruch 1, wobei der Schritt des Erzeugens eines Luftstroms mit hoher Geschwindigkeit in dem Hohlraum (8) ausgeführt wird, indem Luft von dem Hohlraum durch eine Vakuumeinrichtung (B) abgezogen wird.

6. Verfahren gemäß Anspruch 1, wobei die optische Oberfläche eine Linse einer Brille (1) mit einem Rahmen (2) ist, der ein Paar von Linsen (3, 3') aufnimmt, wobei sich der Rahmen um den Umfang jeder Linse erstreckt und wobei die Abdichtung (7) des Reinigungskopfes geformt ist, um gegen den Rahmen (2) um den Umfang der zu reinigenden Linse abzudichten.

7. Verfahren gemäß Anspruch 6, zum gleichzeitigen Reinigen beider Linsen der Brille, wobei das Verfahren die weiteren Schritte umfaßt:
Vorsehen eines Paares von Reinigungsaufbauten (31, 41) zum Reinigen jeweils der vorderen und hinteren Oberflächen der Brillenlinsen, wobei jeder Aufbau zwei Reinigungsköpfe (5) aufweist, um gleichzeitig die Oberflächen beider Linsen zu reinigen;
Anordnen der Aufbauten in einem ausreichenden Abstand, um das Einführen einer Brille (1) dazwischen zu erlauben;
Anordnen einer Brille zwischen die Aufbauten;
Inkontaktbringen der jeweiligen Aufbauten (31, 41) mit der Brille (1), so daß jeder Reinigungskopf (5) um den Rahmenbereich (2) der entsprechenden zu reinigenden Linsenoberfläche abdichtet und den Reinigungshohlraum (8) einschließlich der Oberfläche begrenzt; und
gleichzeitiges Reinigen aller Oberflächen durch die Schritte (b), (c) und (d);
Trennen der Reinigungsaufbauten (31, 41), um das Entfernen der Brille (1) zu gestatten.

8. Vorrichtung zum Reinigen einer optischen Oberfläche, umfassend einen Reinigungskopf (5) mit einer vorderen Fläche, die durch eine Dichtung (7) zum abdichtenden Kontakt mit der zu reinigenden optischen Oberfläche (6) begrenzt ist, wobei die Abdichtung (7) geformt ist, um die Oberfläche zu umschreiben, und der Reinigungskopf dazu geeignet ist, mit der Oberfläche einen flachen abgedichteten Reinigungshohlraum (8) einschließlich der Oberfläche zu begrenzen, eine Einrichtung zum Erzeugen eines Hochgeschwindigkeits-Luftstroms (11) über die Oberfläche in dem Hohlraum und eine Einrichtung (12), um ein Reinigungsfluid in den Luftstrom mit hoher Geschwindigkeit stromaufwärts von der Oberfläche einzuführen und um das Einführen von Reinigungsfluid zu beenden, während der Luftstrom beibehalten wird.

9. Vorrichtung gemäß Anspruch 8, wobei der Reinigungskopf (5) mit einer Lufteinlaßeinrichtung (10) in einem Mittelbereich des Kopfes versehen ist, und mit einer Mehrzahl von Luftauslässen (9), die um einen Umfangsbereich des Kopfes neben der Abdichtung (7) verteilt sind.

10. Vorrichtung gemäß Anspruch 9, wobei die Einrichtung für den Lufteinlaß eine mittige Öffnung (10) aufweist, durch die ein Teil des Luftstroms in den Hohlraum eingeführt werden kann, und einen ringförmigen Kanal (14), der sich um die Öffnung erstreckt, durch den der Rest des Luftstromes eingeführt werden kann.

11. Vorrichtung gemäß Anspruch 10, wobei der ringförmige Kanal eine Mehrzahl von Schaufeln (16) aufweist, die in derselben Richtung in bezug auf die mittige Öffnung (11) gekrümmt sind, um die in den Hohlraum durch den Kanal (14) eintretende Luft abzulenken, damit sie in einem Muster strömt, bei dem die Luft im allgemeinen um die mittige Öffnung innerhalb des Hohlraumes (8) herumwirbelt.

12. Vorrichtung gemäß Anspruch 8, wobei die Einrichtung zum Erzeugen des Hochgeschwindigkeits-Luftstroms über die Oberfläche in dem Hohlraum eine Vakuumeinrichtung (B) umfaßt, um Luft durch den Hohlraum zu ziehen.

13. Vorrichtung gemäß Anspruch 8, zum Reinigen einer Linse einer Brille (1) mit einem Rahmen (2), die ein Paar der Linsen (3, 3') aufnimmt, wobei sich der Rahmen (2) um den Umfang jeder Linse erstreckt, und wobei die Abdichtung (7) des Reinigungskopfes geformt ist, um gegen den Rahmen um den Umfang der zu reinigenden Linse abzudichten.

14. Vorrichtung gemäß Anspruch 13, zum gleichzeitigen Reinigen beider Linsen einer Brille (1), umfassend:
ein Paar von Reinigungsaufbauten (31, 41), um entsprechende vordere und hintere Oberflächen der Brillenlinsen (3, 3') zu reinigen, wobei jeder Aufbau zwei solche Reinigungsköpfe (5) umfaßt, um gleichzeitig die Oberflächen beider Linsen zu reinigen;
eine Einrichtung (50), um die entsprechenden Aufbauten (31, 41) in Kontakt mit der Brille (1) zu bringen, so daß jeder Reinigungskopf (5) um den Rahmenbereich (2) der entsprechenden zu reinigenden Linsenoberfläche abdichtet und einen Reinigungshohlraum (8) einschließlich der Oberfläche begrenzt;
wobei die Einrichtung zum Erzeugen eines Hochgeschwindigkeits-Luftstroms (11) dazu geeignet ist, den Strom in jedem Hohlraum (8) über die Oberfläche der Linse innerhalb des Hohlraumes zu erzeugen, und wobei die Einrichtung (12), um ein Reinigungsfluid in den Hochgeschwindigkeits-Luftstrom einzuführen, angeordnet ist, um das Fluid in den Luftstrom durch jeden der Hohlräume einzuführen; und
eine Einrichtung (50), um die Reinigungsaufbauten und die Brille zu trennen, um das Entfernen der Brille von der Vorrichtung zu gestatten.

## Revendications

1. Un procédé pour nettoyer une surface optique (6) comprenant les opérations consistant :
(a) à prendre une tête de nettoyage (5) présentant une face avant qui comporte un joint d'étanchéité (7) conformé de manière à circonscrire la surface optique à nettoyer ;
(b) à rapprocher l'une de l'autre ladite tête et ladite surface de façon que la surface optique et la tête de nettoyage forment en combinaison une cavité de nettoyage étanche (8) ;
(c) à créer dans ladite cavité un écoulement d'air à grande vitesse (11) balayant ladite surface optique ;
(d) à introduire un fluide de nettoyage dans l'écoulement d'air à grande vitesse en amont de ladite surface (6) ; et
(e) à mettre fin à l'introduction de fluide de nettoyage tout en maintenant ledit écoulement d'air afin d'éliminer tout résidu de fluide de nettoyage.

2. Un procédé selon la revendication 1, dans lequel ladite opération de création d'un écoulement d'air à grande vitesse comprend l'introduction d'air dans ladite cavité (6) généralement dans une région centrale de ladite surface et l'évacuation d'air de ladite cavité (8) par une multiplicité d'emplacements répartis autour d'une région périphérique de ladite surface.

3. Un procédé selon la revendication 2, dans lequel ladite opération d'introduction d'air dans ladite cavité est exécutée par introduction d'une fraction de l'écoulement d'air dans ladite cavité par un orifice central (10), et introduction du reste de l'écoulement d'air dans ladite cavité par un canal annulaire (14) s'étendant autour dudit orifice.

4. Un procédé selon la revendication 3, dans lequel ledit canal annulaire comporte une multiplicité d'ailette,s (16) qui sont incurvées dans la même direction par rapport audit orifice central (10) à l'effet de dévier l'air pénétrant dans ladite cavité par ledit canal (14) pour lui imprimer une configuration d'écoulement dans laquelle l'air tourbillonne globalement autour dudit orifice central à l'intérieur de ladite cavité.

5. Un procédé selon la revendication 1, dans lequel ladite opération de création d'un écoulement d'air à grande vitesse dans ladite cavité (8) est réalisée par aspiration d'air de ladite cavité par des moyens d'aspiration (B).

6. Un procédé selon la revendication 1, dans lequel ladite surface optique est l'un des verres d'une paire de lunettes (1) comportant une monture (2) dans laquelle est reçue une paire desdits verres (3, 3'), la monture s'étendant autour du pourtour de chacun desdits verres, et dans lequel ledit joint d'étanchéité de tête de nettoyage (7) est conformé de façon à s'appliquer de façon étanche contre ladite monture (2) autour du pourtour du verre à nettoyer.

7. Un procédé selon la revendication 6 pour nettoyer simultanément les deux verres d'une susdite paire de lunettes, le procédé comprenant les opérations supplémentaires consistant :
à prendre une paire d'ensembles de nettoyage (31, 41) pour nettoyer les faces avant et arrière respectives des verres de lunettes, chaque ensemble comprenant deux susdites têtes de nettoyage (5) pour nettoyer simultanément les faces des deux verres ;
à disposer lesdits ensembles à une distance mutuelle suffisante pour permettre l'introduction d'une paire de lunettes (1) entre ceux-ci ;
à placer une susdite paire de lunettes entre lesdits ensembles ;
à amener les ensembles respectifs (31, 41) en contact avec les lunettes (1) de manière que chaque tête de nettoyage (5) s'applique de façon étanche autour de la portion de monture (2) de la surface de verre de lunettes respective à nettoyer et définisse une susdite cavité de nettoyage (8) comprenant ladite surface ;
à nettoyer simultanément toutes lesdites surfaces par les opérations (b), (c) et (d) précitées ; et
à séparer les ensembles de nettoyage (31, 41) pour permettre l'enlèvement de la paire de lunettes (1).

8. Un appareil pour nettoyer une surface optique comprenant une tête de nettoyage (5) présentant une face avant délimitée par un joint d'étanchéité (7) propre à assurer un contact étanche avec une telle surface optique (6) à nettoyer, ledit joint (7) étant conformé de manière à circonscrire ladite surface et la tête de nettoyage étant adaptée à définir avec ladite surface une cavité de nettoyage mince et étanche (8) comprenant ladite surface, un moyen pour créer dans ladite cavité un écoulement d'air à grande vitesse (11) balayant ladite surface, et un moyen (12) pour introduire un fluide de nettoyage dans l'écoulement d'air à grande vitesse en amont de ladite surface et pour mettre fin à l'introduction de fluide de nettoyage tout en maintenant ledit écoulement d'air.

9. Un appareil selon la revendication 8, dans lequel ladite tête de nettoyage (5) est munie d'un moyen d'admission d'air (10) dans une région centrale de ladite tête, et d'une multiplicité de sorties d'air (9) réparties sur le pourtour de la tête au voisinage immédiat dudit joint d'étanchéité (7).

10. Un appareil selon la revendication 9, dans lequel ledit moyen d'admission d'air comporte un orifice central (10) par lequel peut être introduite une fraction de l'écoulement d'air admis dans la cavité, et un canal annulaire (14) s'étendant autour dudit orifice et par lequel peut être introduit le reste de l'écoulement d'air.

11. Un appareil selon la revendication 10, dans lequel ledit canal annulaire comporte une multiplicité d'ailettes (16) qui sont incurvées dans la même direction par rapport audit orifice central (10) à l'effet de dévier l'air pénétrant dans la cavité par ledit canal (14) pour lui imprimer une configuration d'écoulement dans laquelle l'air tourbillonne globalement autour de l'orifice central à l'intérieur de la cavité (8).

12. Un appareil selon la revendication 8, dans lequel ledit moyen de création dans ladite cavité d'un écoulement d'air à grande vitesse balayant ladite surface comprend un moyen d'aspiration (B) propre à aspirer de l'air à travers la cavité.

13. Un appareil selon la revendication 8 pour nettoyer un verre d'une paire de lunettes (1) comportant une monture (2) dans laquelle est reçue une paire desdits verres (3, 3'), la monture s'étendant autour du pourtour de chacun desdits verres, dans lequel le joint d'étanchéité de tête de nettoyage (7) est conformé de façon à s'appliquer de façon étanche contre ladite monture autour du pourtour du verre de lunettes à nettoyer.

14. Un appareil selon la revendication 13 pour nettoyer simultanément les deux verres d'une susdite paire de lunettes (1), l'appareil comprenant :
une paire d'ensembles de nettoyage (31, 41) pour nettoyer les faces avant et arrière respectives des verres de lunettes (3, 3'), chaque ensemble comprenant deux susdites têtes de nettoyage (5) pour nettoyer simultanément les faces des deux verres ;
des moyens (50) pour amener les ensembles respectifs (31, 41) en contact avec lesdites lunettes (1) de manière que chaque tête de nettoyage (5) s'applique de façon étanche autour de la portion de monture (2) de la surface de verre de lunettes respective à nettoyer et définisse une cavité de nettoyage (8) comprenant ladite surface ;
où ledit moyen de création d'un écoulement d'air à grande vitesse (11) est adapté à créer un tel écoulement dans chacune desdites cavités (8) pour balayer la surface du verre de lunettes à l'intérieur de la cavité correspondante, et où ledit moyen (12) d'introduction d'un fluide de nettoyage dans l'écoulement d'air à grande vitesse est agencé de manière à introduire le fluide dans l'écoulement d'air traversant chacune desdites cavités, et,
des moyens (50) pour séparer les ensembles de nettoyage et les lunettes afin de permettre de retirer les lunettes de l'appareil.
